# EUROPEAN PATENT APPLICATION

(11) **EP 1 286 521 A1**
(43) Date of publication of application: **26.02.2003**
(21) Application number: 01120192.8
(22) Date of filing: 22.08.2001
(51) Int. Cl.: H04L 29/12

(54) **Method and system for linking web sites**

(71) Applicant: ViaGold Direct Network Limited, Kwun Tong, Kowloon, Hong Kong (CN)
(72) Inventor: Kung, Tien Mei, Sheung Wan, Hong Kong (CN)
(74) Representative: Kilian, Helmut, Dr.

(57) **Abstract**

A method and system for linking web sites is proposed, in which linkage of a user's computer device to a web site in World Wide Web (WWW) is achieved by inputting a numeric address of the web site in place of an IP address through the computer device merely having a simple numeric keypad, such as a set top box, PDA (personal digital assistant) or cellular phone; while the numeric web address has numerals thereof positioned from left to right corresponding in sequence to large to small categories of web sites.

## Description

### FIELD OF THE INVENTION

The present invention relates to methods and systems for linking web sites, and more particularly, to a method and a system for linking web sites, in which a numeric address of a web site is employed in place of an IP (Internet protocol) address, and the numeric web address has numerals thereof from left to right corresponding to large to small categories of web sites.

### BACKGROUND OF THE INVENTION

In the world of Internet, every node is assigned with a unique IP address according to the TCP/IP protocol. Likewise, a web site in World Wide Web has its own unique IP address. An IP address consists of four numbers correlated in level of domains with one another for representing a machine in the Internet, and thus web sites constructed in the machine can be accessed by inputting the IP address of the machine through linkage to the Internet. However, the web IP address expressed in the form of numbers does not provide information of the web site. Therefore, a web site address denoted by a string of English letters is commonly employed. For example, a popular web site in Taiwan, www.hinet.net, has its IP address, 168.95.1.83, which is barely known to people.

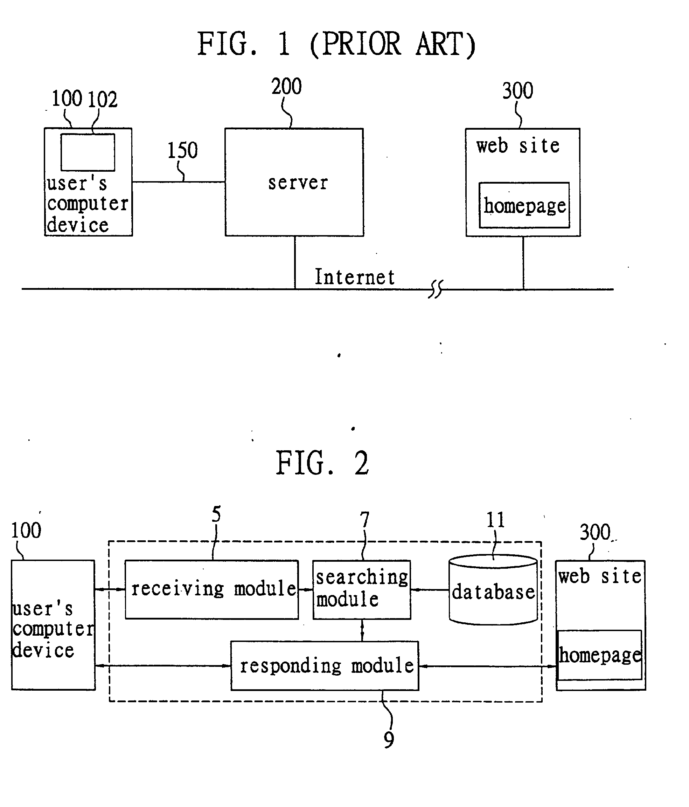

Illustrated in Fig. 1 is a conventional method for linking web sites. First, a user's computer device 100 is linked to a server mainframe 200 through network connection 150, for allowing the user to send a request to the server for accessing a web site. In general, the user inputs an address of a web site 300 to an input URL box at a browser 102 of the user's computer device 100, or selects a hyperlink of the web site 300 at the browser 102. The server then inquires a Domain Name System (DNS) for an IP address of the web site 300 according to the input address or the selected hyperlink of the web site 300. The DNS replies the IP address of the web site 300 to the server, for allowing the server subsequently to construct linkage to the web site 300, so as to display a homepage 302 of the web site 300 on the browser 102.

For example, in order to access the HiNet web site, the user needs to input www.hinet.net in the input URL box at the browser. The browse inquires the DNS about www.hinet.net and obtains its IP address 168.95.1.83 from the DNS, so as to display a homepage of the HiNet web site in the browser.

Referring to Fig. 1, the network connection 150 can be a wired or wireless network. Similarly, the user's computer device 100 is not restricted to a personal computer (PC), notebook (NB) or palm-sized computer, but can also be a carry-on device, such as set top box, other similar information appliance (IA) or personal digital assistant (PDA), or a communication device such as a WAP (wireless application protocol) cellular phone set, having access to the network. However, for the sake of easy carry and simple operation, there is only a simple numeric keypad accompanied with the set top box, PDA and cellular phone, and thus the conventional method for linking web sits can not be appropriately applied to these devices due to difficulty in inputting a text web address.

Moreover, in order to avoid repetition in web address with registered web sites, a newly registered web site tends to have its text web address increased in length, making the problem of the difficulty in text inputting even worse.

In addition, besides text, the web sites tends to contain more multimedia information such as voice and image nowadays, and thus it can be expected that more people will be interested in using the Internet in the future. However, currently the web addresses are mostly expressed in English. This definitely causes inconvenience for people from a non-English background or illiterates.

### SUMMARY OF THE INVENTION

A primary objective of the present invention is to provide a method and a system for linking web sites, for allowing a device, such as a set top box, personal digital assistant (PDA) or a WAP cellular phone set, merely with a simple numeric keypad to construct linkage to a web site. Moreover, in the method and system for linking web sites, an address of the web site is constructed relating to contents of the web site, which is advantageous for classifying and retrieving the web sites. In addition, in the use of the method and system for linking web sites, people from a non-English background or illiterates are capable of access the web site.

In accordance with the foregoing and other objectives, the present invention proposes a method for linking web sites, applied to a system for linking web sites for connecting a user's computer device to a web site in World Wide Web, wherein the system has a database including IP addresses, and numeric web addresses each corresponding to the respective IP address and having numerals thereof positioned from left to right corresponding in sequence to large to small categories of web sites. The method for linking web sites comprises the steps of: (1) inputting a requested web address via a user to the user's computer device, and receiving the requested web address via the system for linking web sites from the user's computer device; (2) searching via the system for linking web sites in the database for data relating to the requested web address, wherein if no numeric web address in the database matches the requested web address, then step (3) is followed; if at least one numeric web address similarly matches the requested web address, then step (4) is followed; and if a numeric web address exactly matches the requested web address, then an IP address corresponding to the exactly matched numeric web address is acquired and step (5) is followed; (3) sending a message for indicating failure in searching the data relating to the requested web address search via the system for linking web sites to the user's computer device, and advising the user to input another requested web address, then returning to the step (1); (4) sending the data relating to similarly matched numeric web addresses via the system for linking web sites to the user's computer device, for allowing the user to select one of the data and for acquiring an IP address of the selected datum, and then going to step (5); and (5) searching and linking a web site corresponding to the IP address via the system for linking web sites, and sending a homepage of the web site to the user's computer device, for allowing the user to interact with the web site.

The system for linking web sites of the invention is used for connecting a user's computer device to a web site of World Wide Web, comprising: a database including IP addresses, and numeric web addresses each corresponding to the respective IP address and having numerals thereof positioned from left to right corresponding in sequence to large to small categories of web sites; a receiving module for receiving a requested web site input by a user at the user's computer devices; a searching module for searching in the database for data relating to the requested web address from the receiving module; and a responding module. If no numeric web address in the database matches the requested web address, the responding module sends a message indicating failure in searching the data relating to the requested web address search to the user's computer device, and advises the user to input another requested web address. If at least one numeric web address in the database similarly matches the requested web address, the responding module sends the data relating to similarly matched numeric web addresses to the user's computer device, so as to allow the user to select one of the data for acquiring an IP address of the selected datum, and link a web site corresponding to the IP address to the user's computer device for allowing the user to interact with the web site. If a numeric web address in the database exactly matching the requested web address, the responding module links a web site corresponding to an IP address of the exactly matched numeric web address to the user's computer device for allowing the user to interact with the web site.

### BRIEF DESCRIPTION OF THE DRAWINGS

The invention can be more fully understood by reading the following detailed description of the preferred embodiments, with reference made to the accompanying drawings, wherein:
Fig. 1 (PRIOR ART) is a schematic diagram showing a network architecture of a conventional method for linking web sites;
Fig. 2 is a block diagram of a first preferred embodiment of the system for linking web sites of the invention;
Fig. 3 is a schematic diagram showing the steps involved in using a first preferred embodiment of the method for linking web sites of the invention;
Fig. 4 is a schematic diagram showing the steps involved in using a second preferred embodiment of the method for linking web sites of the invention;
Fig. 5 is a block diagram of a third preferred embodiment of the system for linking web sites of the invention;
Fig. 6 is a block diagram of a web site linking program in the third preferred embodiment;
Fig. 7 is a schematic diagram of a homepage provided by a receiving program in the third preferred embodiment;
Fig. 8 is a schematic diagram of a web page provided by a responding program in the third preferred embodiment;
Fig. 9 is a schematic diagram of another web page provided by a responding program in the third preferred embodiment; and
Fig. 10 is a data table of a database used in the method and system for linking web sites of the invention.

### DETAILED DESCRIPTION OF THE PREFERRED EMBODIMENTS

### First Preferred Embodiment

Fig. 2 illustrates a first preferred embodiment of the system for linking web sites of the invention. As shown in the drawing, in the first embodiment, the system for linking web sites (enclosed by dotted lines) is constructed between a user's computer device 100 and a web site 3 of the World Wide Web, and comprises a receiving module 5, a searching module 7, a responding module 9 and a database 11. After linking to the user's computer device 100, the receiving module 5 receives a requested web address from the user's computer device 100. The searching module 7 searches in the database 11 for data relating to the requested web address. The responding module 9 provides the user's computer device 100 with linkage to the web site 3, or replies a reason for linkage unavailability to the user's computer device 100, according to the searched result from the searching module 7.

The database 11 contains data for IP addresses and numeric web addresses each corresponding to the IP address and having numerals thereof from left to right corresponding to large to small categories of web sites. The searching module 7 uses part or all of the requested web site as a searching keyword so as to search a numeric web address partially or entirely matching the searching keyword.

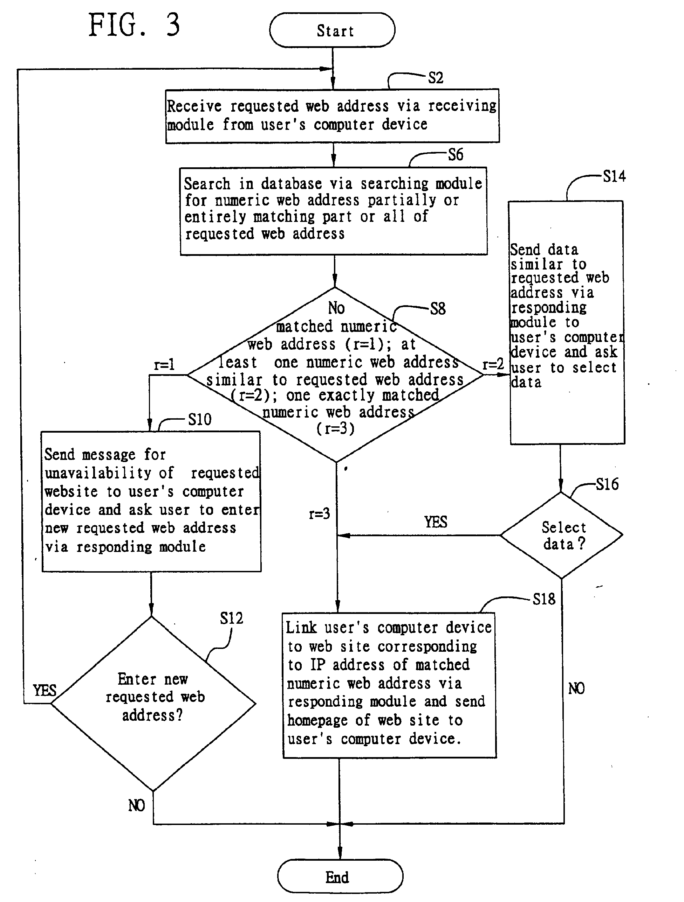

Fig. 3 illustrates the steps involved in using a first preferred embodiment of the method for linking web sites of the invention. The method for linking web sites of the invention is described as follows with reference to Figs. 2 and 3.

In the first embodiment of the method for linking web sites, the user's computer device 100 is linked to the system for linking web sites of the invention. The user's computer device 100 is inputted with a requested web address, which is then transmitted to and received by the receiving module 5 (step S2), so as to allow the searching module 7 to search in the database 11 for data relating to part or all of the requested web address (step S6).

As above mentioned, the searching module 7 searches in the database 11 for data relating to a numeric web address partially or entirely matching part or all of the requested web address. Therefore, three cases of searched results (r) are generated. That is, no numeric web address in the database 11 matches the requested web address (r = 1), at least one numeric web address similarly matches the requested web address (r = 2), and one numeric web address exactly matches the requested web address (r = 3).

As shown in Fig. 3, in step S8, if r = 1, then step S10 is followed; if r = 2, then step S14 is followed; if r = 3, then step S18 is followed.

In step S10, the responding module 9 sends a message for denoting the unavailability of a web site corresponding to the requested web address to the user's computer device 100 and asks the user if to enter a new requested web address. Then, in step S12, if the user decides to enter the new request, then step S2 is returned thereto; if the new request is not provided or termination is preferred by the user, then ' the method for linking web sites ends in operation.

In step S14, the responding module 9 sends all data similar to the requested web address to the user's computer device 100 and asks the user if to select one of them. Then, in step S16, if the user selects one of the similar data, then step S2 is returned thereto; if no data is selected or termination is preferred by the user, then the method for linking web sites ends in operation.

In step S18, the responding module 9 obtains an IP address corresponding to the matched numeric web address in step S8 from the searching module 7 or an IP address of the selected data in the step S16, so as to provide the user's computer device 100 with linkage to the web site 3 corresponding to the IP address, and send a homepage of the web site 3 to the user's computer device 100. The method for linking web sites then ends in operation.

In the first embodiment of the method and system for linking web sites of the invention, with the use of numeric web addresses, a device with a simple numeric keypad, such as a set top box, personal digital assistant or cellular phone, can easily construct linkage to a web site in a manner of inputting numerals for a numeric web address of the web site through the keypad. Moreover, as previously mentioned, the method and system of the invention further allows people from a non-English background or illiterates to easily access the web site.

### Second Preferred Embodiment

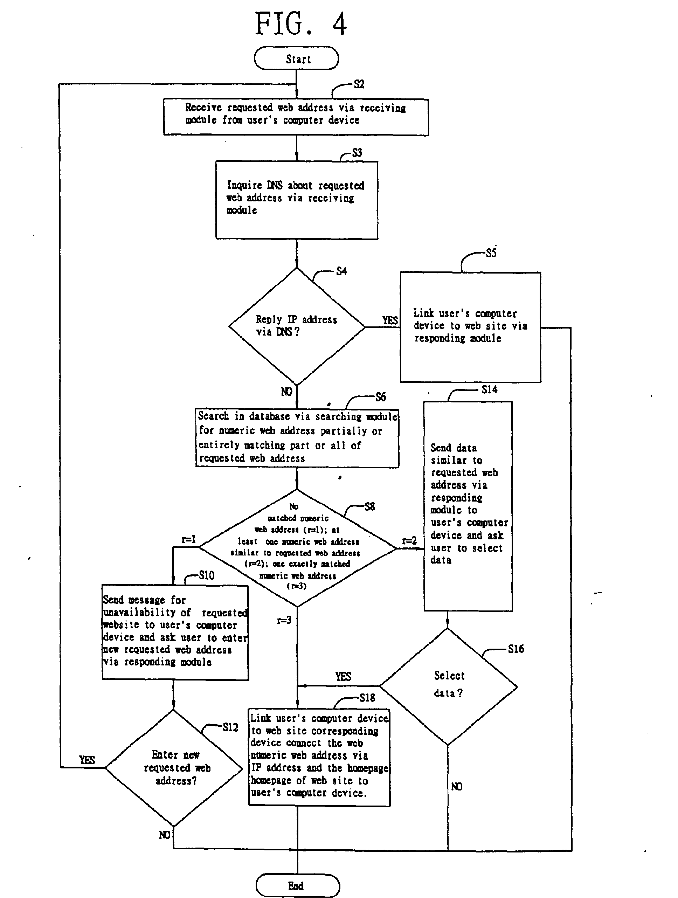

Fig. 4 illustrates the steps involved in using a second preferred embodiment of the method for linking web sites of the invention. As shown in the drawing, the second embodiment is accomplished by adding steps S3-S5 between steps S2 and S6 in Fig. 3. In step S3, the receiving module 5 inquires DNS about the requested web address. In step S4, if the DNS replies that no matched IP address for the requested web site is available, then step S6 is followed; if the DNS replies with a matched IP address, then step S5 is followed. In step S5, the responding module 9 allows the user's computer device 100 to be linked to the web site 3 corresponding to the IP address, and sends the homepage of the web site 3 to the user's computer device 100. Then it ends the method for linking web sites of the invention.

In addition to the improvements rendered in the first embodiment, the second embodiment of the invention is compatible with the existing DNS. Therefore, no matter an IP address, text web address or numeric web address used in the invention is input, a desired web site can be accessed by a user in the use of the method and system for linking web sites of the invention.

### Third Preferred Embodiment

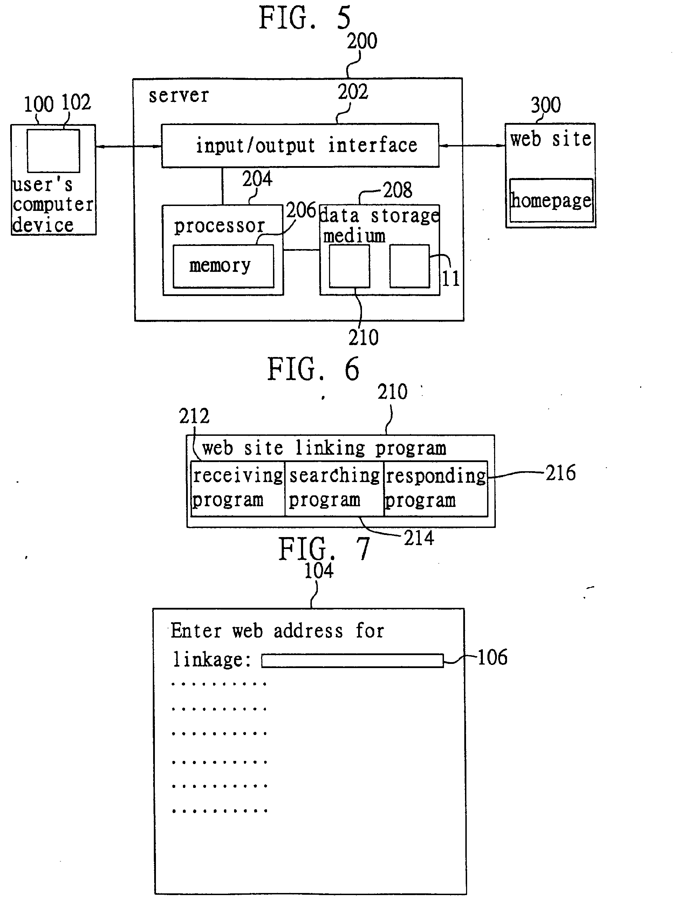

Fig. 5 illustrates a third preferred embodiment of the system for linking web sites of the invention; illustrated in Fig. 6 is a web site linking program in the third preferred embodiment. As shown in Figs. 5 and 6, the system for linking web sites in the third embodiment is constructed in the server 200 having an input/output interface 202, a processor 204, a memory 206 and a data storage medium 208; while the data storage medium 208 comprises a web site linking program 210 (as shown in Fig. 6) and a database 11.

The web site linking program 210 can be employed by the processor 204 for executing the tasks of the receiving module, searching module and responding module as mentioned above. In the use of the web site linking program 210, data transmission and reception are implemented through the input/output interface 202. As shown in Fig. 6, the web site linking program 210 comprises a receiving program 212, a searching program 214 and a responding program 216. The web site linking program 210 in this embodiment is stored, but not limited to, in the data storage medium 208. Alternatively, the web site linking program 210 can also be stored in a read-only memory (such as MASK ROM, EPROM and EEPROM) of the processor 204.

The processor 204 can be a microprocessor or CPU, while the memory 206 can be DRAM. The data storage medium 208 can be a hard disk, tape or compact disc, whereas the database 11, as previously described, contains data for IP addresses and numeric web addresses each corresponding to the IP address and having numerals thereof from left to right correspond to large to small categories of wen sites.

A method for linking web site applied to the system for linking web sites illustrated in Fig. 5 will be described in detail with reference to the receiving program 212, the searching program 214 and the responding program 216 as follows.

After the user's computer device 100 is linked to the server 200, the receiving program 212 is activated and provides a homepage of the system for linking web sites of the invention to the user's computer device 100, while the homepage is displayed on a browser 102 of the user's computer device 100. Moreover, as the user inputs a requested web address to the URL input box of the browser 102, the receiving program 212 holds the requested web address and temporarily store it in the memory 206. In the case of no browser provided in the user's computer device 100, the receiving program 212 provides a homepage 104 shown in Fig. 7 for allowing the user to enter the requested web address in an input box 106 of the homepage 104.

The searching program 214 retrieves the requested web address from the memory 206 for analysis. The analysis herein refers to division for the requested web address into parts according to figures of a number at each level of a numeric web address, e.g. four levels each having a three-figure number. The divided parts of the requested web address are temporarily stored in the memory 206.

The searching program 214 allows the user to input the requested web address smaller in figure than the numeric web address (such as 12 figures), that is, the requested web address having less figures can be used in web site search. For example, in the case of the 12-figure numeric web address being divided into four levels each having a three-figure number, if the requested web address is "02536", the searching program 214 divides it into four parts as "025", "036"(or "360-369"), "NULL" and "NULL", which are temporarily stored in the memory 206.

After analyzing the requested web address, the searching program 214 searches the requested web address in the database 11. That is, the searching program 214 retrieves the divided parts of the requested web address from the memory 206, while the divided parts are considered as a first level number, a second level number, etc, so as to be compared in order with the level numbers of the numeric web address in the data storage medium 208, respectively. The compared results (r) can be: r = 1, in which no numeric web address in the database 11 matches the requested web address; r = 2, in which at least one numeric web address similarly matches the requested web address; and r = 3, in which one numeric web address exactly matches the requested web address.

After searching in the database 11, the searching program 214 temporarily stores in the memory 206 the value of r and record numbers for the similarly or exactly matched data of the numeric web address when r = 2 or 3, respectively.

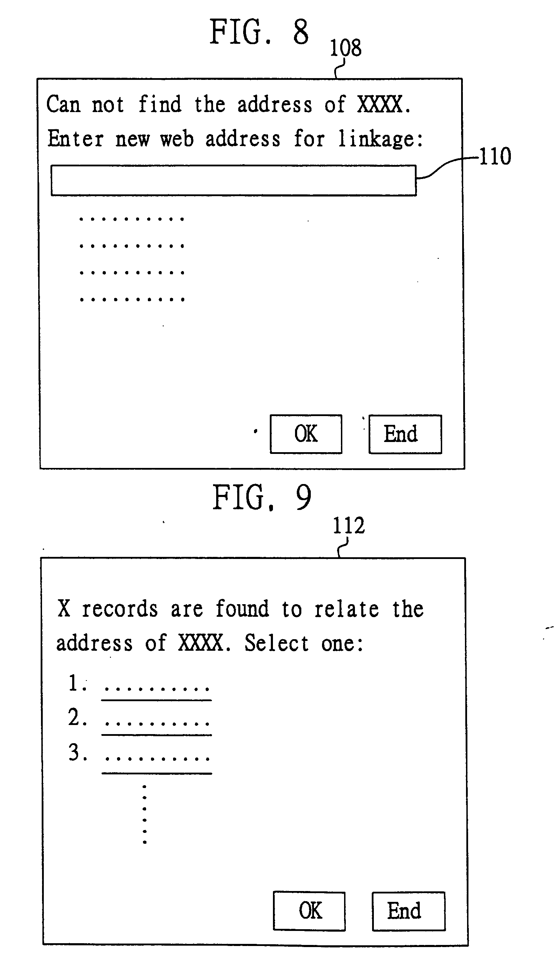

The responding program 216 reads the value of r from the memory 206. If r = 1, it provides a web page 108 shown in Fig. 8, for denoting the unavailability for the requested web address and asking the user to enter a new requested web address in an input box 110. If r = 2, the responding program 216 reads the record numbers for the similarly matched data from the memory 206 and retrieves the data from the database 11, so as to provide a web page 112 shown in Fig. 9 listing all similarly matched data of web sites, for allowing the user to select one of the web sites. After the web site 300 is selected, according to an IP address of the web site 300, the user's computer device 100 can be linked to the web site 300, so as to allow the user to interact with the web site 300. If r = 3, the responding program 216 reads the record number of the exactly matched data in the memory 206 and retrieves its corresponding IP address of the web site 300 from the database 11. According to the IP address, the responding program 216 makes the user's computer device 100 linked to the web site 300, for allowing the user to interact with the web site 300 via its homepage.

As shown in Figs. 8 and 9, the web pages 108 and 112 contain two buttons, OK and End. The user presses the OK button after entering a new requested web address or selecting a web site listed on the web page 112, for activating the responding program 216 to make connection. The user can press the End button for stop continuing the connection, and then the connection is terminated

In addition to the improvements depicted in the first embodiment, as the receiving program 212 provides the homepage 104 having the input box 106, the method and system for linking web sites in this embodiment can be applied to any user's computer device with or without a browser.

Moreover, as the searching program 214 allows a web address less in figure to be employed in web site searching, the desired web sites can be easily found and accessed by the user in the use of the method for linking web sites of the invention.

In all the foregoing embodiments, the user's computer device 100 can be connected to the system for linking web sites of the invention through a wired or wireless network. Similarly, the user's computer device 100 is not restricted to a personal computer (PC), notebook (NB) or palm-sized computer, but can also be a carry-on device, such as set top box, other similar information appliance (IA) or personal digital assistant (PDA), or any other communication device capable of accessing Internet, such as a WAP cellular phone set.

In the third embodiment, the system for linking web sites is constructed, but not limited to, in the server 200 consisting of the input/output interface 202, processor 204, memory 206, data storage medium 208. Alternatively, the system can be entirely constructed in the user's computer device, or can be partially disposed in the user's computer device and in the server, respectively. The system can also be integrated into a peripheral device for externally bridging the user's computer device and the server.

In the third embodiment, the receiving program 212, searching program 214 and responding program 216 are executed, but not limited to, by the processor 204. That is, they can also be accommodated in specially fabricated hardware, such as integrated circuit (IC), to be functioned with the processor 204.

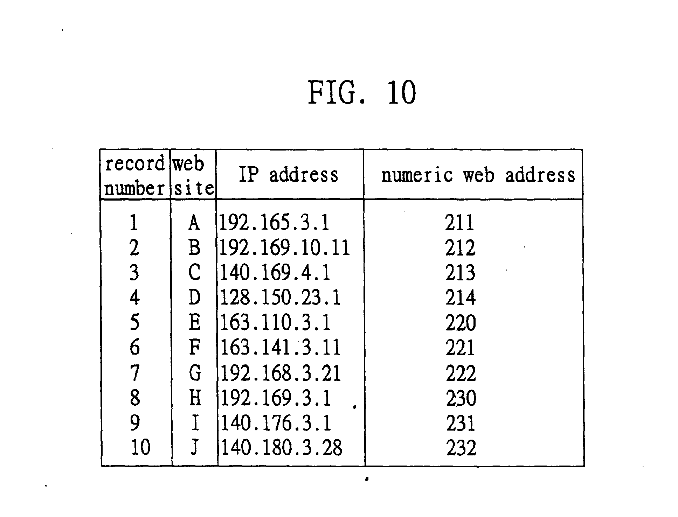

In the database 11 of Fig. 10, it illustrates a response of the invention generated corresponding to a request for different web site linkage. The database 11 is supposed to have columns for record number, web site name, IP address and numeric web address.

### Example 1

If the requested web address is "51", then no numeric web address in the records A-J similarly or exactly matches "51" after analysis and comparison via the searching program 214. Therefore, the responding program 216 provides the web page shown in Fig. 8 and asks for a new requested web address to be input by the user.

### Example 2

If the requested web address is "21", after analysis and comparison via the searching program 214, there are four similarly matched records, A, B, C and D, which each has first two numerals to be "21". Therefore, the responding program 216 provides the web page shown in Fig. 9 and asks the user to select one of the listed web sites.

As the numeric web address is defined in order corresponding to large to small categories of web sites. That is, if the first numeral "2" represents the web sites relating to hospitals, and the second numeral "1" refers to the web sites relating to ' teaching hospitals, then four teaching hospitals, A, B, C and D, can be retrieved as the requested web address "21" is input to the method and system for linking web sites of the invention.

Therefore, in the method and system for linking web sites of the invention, not only the user can be informed with general content of a web site from its numeric web address, but also web sites of a same category can be retrieved and accessed by the user.

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements.

## Claims

1. A method for linking web sites, applied to a system for linking web sites for connecting a user's computer device to a web site in World Wide Web, wherein the system has a database including IP addresses, and numeric web addresses each corresponding to the respective IP address and having numerals thereof positioned from left to right corresponding in sequence to large to small categories of web sites; the method comprising the steps of:
(1) inputting a requested web address via a user to the user's computer device, and receiving the requested web address via the system for linking web sites from the user's computer device;
(2) searching via the system for linking web sites in the database for data relating to the requested web address, wherein if no numeric web address in the database matches the requested web address, then step (3) is followed; if at least one numeric web address similarly matches the requested web address, then step (4) is followed; and if a numeric web address exactly matches the requested web address, then an IP address corresponding to the exactly matched numeric web address is acquired and step (5) is followed;
(3) sending a message for indicating failure in searching the data relating to the requested web address search via the system for linking web sites to the user's computer device, and advising the user to input another requested web address, then returning to the step (1);
(4) sending the data relating to similarly matched numeric web addresses via the system for linking web sites to the user's computer device, for allowing the user to select one of the data and for acquiring an IP address of the selected datum, and then going to step (5); and
(5) searching and linking a web site corresponding to the IP address via the system for linking web sites, and sending a homepage of the web site to the user's computer device, for allowing the user to interact with the web site.

2. The method of claim 1, prior to the step (2), further comprising a step of:
inquiring DNS (domain name system) via the system for linking web sites about the requested web address, wherein if the DNS replies an IP address, then the IP address is acquired and the step (5) is followed; if the DNS has no reply, then the step (2) is followed.

3. The method of claim 1, wherein the user's computer device is a computer.

4. The method of claim 3, wherein the computer includes a browser for allowing the user to input the requested web address thereto.

5. The method of claim 1, wherein the system for linking web sites comprises:
the database;
a receiving module for receiving the requested web address in the step (1);
a searching module for searching the data relating to the requested web address in the step (2);
a responding module for executing the step (3), (4) or (5) according to a searched result from the step (2).

6. The method of claim 1, wherein the system for linking web sites is constructed in a server.

7. The method of claim 1, wherein the system for linking web sites is constructed in a computer device connected to a server.

8. The method of claim 1, wherein the system for linking web sites is integrated into a peripheral device externally connected to a computer device and a server, respectively.

9. The method of claim 1, wherein one part of the system for linking web sites is constructed in a computer device, and the other part of the system is constructed in a server connected to the computer device.

10. A method for linking web sites, applied to a system for linking web sites for connecting a user's computer device to a web site in World Wide Web, wherein the system has a receiving module, a searching module, a responding module and a database, and the database includes IP addresses, and numeric web addresses each corresponding to the respective IP address and having numerals thereof positioned from left to right corresponding in sequence to large to small categories of web sites; the method comprising the steps of:
(1) inputting a requested web address via a user to the user's computer device, and receiving the requested web address via the receiving module from the user's computer device;
(2) searching via the searching module in the database for data relating to the requested web address from the receiving module, and sending a searched result to the responding module;
(3) determining the searched result from the searching module via the responding module, wherein if no numeric web address in the database matches the requested web address, then step (4) is followed; if at least one numeric web address similarly matches the requested web address, then step (5) is followed; and if a numeric web address exactly matches the requested web address, then an IP address corresponding to the exactly matched numeric web address is acquired and step (6) is followed;
(4) sending a message for indicating failure in searching the data relating to the requested web address search via the responding module to the user's computer device, and advising the user to input another requested web address, then returning to the step (1);
(5) sending the data relating to similarly matched numeric web addresses via the responding module to the user's computer device, for allowing the user to select one of the data and for acquiring an IP address of the selected datum, and then going to step (6); and
(6) searching and linking a web site corresponding to the IP address via the responding module, and sending a homepage of the web site to the user's computer device, for allowing the user to interact with the web site.

11. The method of claim 10, prior to the step (2), further comprising a step of:
inquiring DNS (domain name system) via the system for linking web sites about the requested web address, wherein if the DNS replies an IP address, then the IP address is acquired and the step (6) is followed; if the DNS has no reply, then the step (2) is followed.

12. The method of claim 10, wherein the user's computer device is a computer.

13. The method of claim 12, wherein the computer includes a browser for allowing the user to input the requested web address thereto.

14. The method of claim 10, wherein the receiving module, searching module, responding module and database are constructed in a server.

15. The method of claim 10, wherein the receiving module, searching module, responding module and database are constructed in a computer device connected to a server.

16. The method of claim 10, wherein the receiving module, searching module, responding module and database are integrated into a peripheral device externally connected to a computer device and a server, respectively.

17. The method of claim 10, wherein one part of the receiving module, searching module, responding module and database is constructed in a computer device, and the other part thereof is constructed in a server connected to the computer device.

18. A system for linking web sites for connecting a user's computer device to a web site of World Wide Web, comprising:
a database including IP addresses, and numeric web addresses each corresponding to the respective IP address and having numerals thereof positioned from left to right corresponding in sequence to large to small categories of web sites;
a receiving module for receiving a requested web site input by a user at the user's computer devices;
a searching module for searching in the database for data relating to the requested web address from the receiving module; and
a responding module, if no numeric web address in the database matching the requested web address, for sending a message indicating failure in searching the data relating to the requested web address search to the user's computer device and advising the user to input another requested web address; if at least one numeric web address in the database similarly matching the requested web address, for sending the data relating to similarly matched numeric web addresses to the user's computer device, so as to allow the user to select one of the data for acquiring an IP address of the selected datum, and link a web site corresponding to the IP address to the user's computer device for allowing the user to interact with the web site; and if a numeric web address in the database exactly matching the requested web address, for linking a web site corresponding to an IP address of the exactly matched numeric web address to the user's computer device for allowing the user to interact with the web site.

19. The system of claim 18, wherein the user's computer device is a computer.

20. The system of claim 19, wherein the computer includes a browser for allowing the user to input the requested web address thereto.

21. The system of claim 18, wherein the receiving module, searching module, responding module and database are constructed in a server.

22. The system of claim 18, wherein the receiving module, searching module, responding module and database are constructed in a computer device connected to a server.

23. The system of claim 18, wherein the receiving module, searching module, responding module and database are integrated into a peripheral device externally connected to a computer device and a server, respectively.

24. The system of claim 18, wherein one part of the receiving module, searching module, responding module and database is constructed in a computer device, and the other part thereof is constructed in a server connected to the computer device.
